# EUROPEAN PATENT SPECIFICATION

(11) **EP 0 412 993 B1**
(45) Date of publication and mention of the grant of the patent: **12.07.1995**
(21) Application number: 89905522.2
(22) Date of filing: 04.05.1989
(51) Int. Cl.: G11B 15/675, G11B 5/56, H02K 19/08, H02K 3/47, G11B 5/55, G11B 27/34, G11B 15/08, G11B 15/093

(54) **TAPE DRIVE MACHINES**
BANDANTRIEBSGERÄT
MACHINES D'ENTRAINEMENT DE BANDE

(30) Priority: 04.05.1988 GB 8810461
(43) Date of publication of application: 20.02.1991
(60) Divisional application: 94202793.9
(73) Proprietor: M4 DATA LIMITED, Wells, Somerset BA5 3DH (GB)
(72) Inventor: GORDON, Norman, Wells Somerset (GB); ELLIOTT, Robert, Vernon, Easton Wells Somerset (GB); DONKIN, Charles, William, Wells Somerset (GB); CORBETT, Aubrey, Edward, Kenilworth Warwickshire CU8 2BE (GB)
(74) Representative: Williams, Janice
(86) International application number: GB8900472
(87) International publication number: WO8911148

(56) References cited:
- EP-A- 0 177 133
- BE-A- 0 827 391
- DE-A- 2 256 061
- DE-A- 3 022 145
- FR-A- 2 170 412
- FR-A- 2 195 030
- FR-A- 2 251 880
- FR-A- 2 353 114
- GB-A- 2 087 630
- US-A- 2 951 914
- US-A- 4 701 817
- PATENT ABSTRACTS OF JAPAN, Vol. 12, No. 93 (P-680)(2940), 26 March 1988; & JP-A-62226466 (Copal Co. Ltd) 5 October 1987

## Description

This invention relates to a recording/reproducing apparatus using tape cartridges and to a tape drive apparatus. The invention is for use with magnetic or optical tape, or other types of data storage tape.

In this specification, the tape drive apparatus is described in one particular orientation, but the claims should be interpreted to cover the apparatus whether in that orientation or bodily turned, for example, through a right angle.

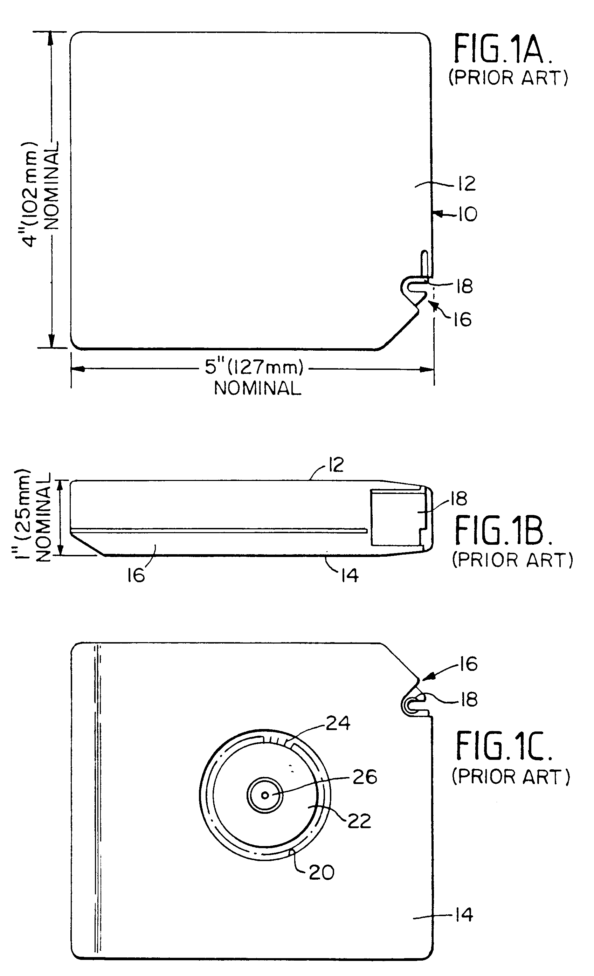

The invention is more particularly, but not exclusively, concerned with a tape drive for use with a single reel 5˝ x 4˝ x 1˝ (127mm x 102mm x 25mm) (nominal sizes) tape cartridge according to, for example, specification IBM GS 32-0048-0, ECMA 120 or ANSI X3B5-87-037. An example of such a product is the IBM 3480 cartridge. Such a cartridge is shown schematically in Figures 1A to 1C. The cartridge has a generally flat rectangular housing 10 with upper and lower faces 12, 14 and a peripheral wall 16. At one corner 16 of the housing, a leader block 18 is a snap-fit in the housing, and, in use, the block 18 to which one end of the tape is attached, is unclipped from the housing and is used to withdraw the end of the tape and thread the tape through the tape drive machine and onto a take-up reel. The lower face 14 of the housing has a circular aperture 20 which provides access to a supply reel drive member 22 having a ring of teeth 24. A locking button 26 is formed at the centre of the drive member 22. In use, a supply reel hub of the tape drive machine depresses the drive member 22 upwardly into the housing by about 4mm, and dogs on the supply reel hub engage the teeth 24. Furthermore, a release member on the supply reel hub engages the locking button 26 and depresses it a further 2mm or so. The supply reel can then rotate in housing 10 and be driven by the supply reel hub through the action of the interengaging dogs and teeth 24.

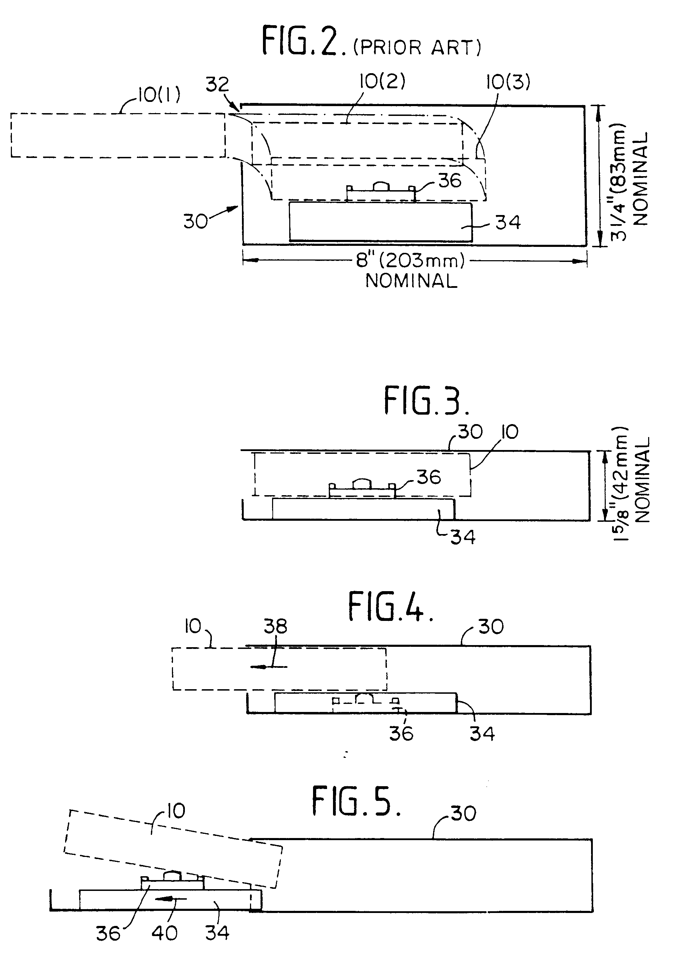

It is known to provide the tape drive machine in what is termed a 5 1/4˝ profile industry standard enclosure, which is so called because it was the size of the enclosure for the initial 5 1/4˝ floppy disc drives. Such an enclosure measures 8˝ x 5.75˝ x 3.25˝ (203mm x 146 mm x ′83mm) excluding any fascia . A typical method of loading a 5˝x4˝x1˝ tape cartridge into such an enclosure is illustrated in Figure 2. In that drawing, reference numeral 30 denotes the enclosure, which has an aperture 32 in the front panel to receive the cartridge 10 edgeways. A supply reel motor 34 with a drive hub 36 is mounted in the enclosure 30. As the cartridge is slid in edgeways, it is guided for movement along the path indicated by the chain dot lines from position 10(1), through position 10(2) to operating position 10(3), as shown in dashed lines. It will be noted that the cartridge drops downwardly onto the supply reel hub 36 between position 10(2) and 10(3), and this movement is essential to enable the hub 36 to take up engagement with the drive member in the cartridge.

One design desideratum is to make computer equipment as small as possible, but a restraint on this is the need to fit in with existing industry standards. Developments in the design of floppy disc drives have now enabled a drive to be manufactured in an enclosure which is half of the height of the original industry standard. This is termed a half-height 5 1/4˝ profile enclosure and thus enables two floppy disc drives to be stacked in the space of a previous full-height 5 1/4˝ profile enclosure. The nominal dimensions of the half-height 5 1/4˝ profile are 8˝ x 5.75˝ x 1.625˝ (203mm x 146mm x 41mm).

Consideration has been given to shrinking the size of a 5x4x1 cartridge drive so that it fits into the half-height 5 1/4˝ profile, but without any success. Indeed, referring to an article in "Systems International" December 1984 relating to developments in the tape drive industry, it is said on page 48:
"How small a package will the IBM cartridge fit into? ........ A 5x4x1 .......will easily fit into a standard 8in footprint with desirable performance parameters, but it will certainly not fit into a half-high 5 1/4in footprint with present technology feasabilities. Whether it will fit into a full-high 5 1/4 footprint will be decided by the ingenuity of the OEM drive manufacturers".

One of the most significant problems with fitting a 5˝x4˝x1˝ drive into a half-height 5 1/4˝ profile is the height limitation. The height of the profile is 41.3mm. With 1mm thick top and bottom housing plates, the interior height is 39.3mm. The cartridge height is 25.2mm, which leaves 14.1mm spare to accommodate the height of the supply reel motor and the hub, and to provide necessary clearances. The hub and release button have to protrude about 8mm above the motor, and with 1mm being left for clearance, this enables a motor of only 5.1mm in height to be used. With present technology, it has not been possible to construct a motor of this height with the required drive characteristics.

Patent Application JP-A-62-226466 describes a tape drive in which a cartridge of the above type can be slid edgeways into a carrier and then the carrier and cartridge are moved downwards to engage a drive hub of the tape drive with a drive hub receiving member of the cartridge.

Also, Patent Application GB-A-1418012 describes a tape drive for a tape cartridge of the type having a generally flat cartridge housing with top and bottom faces and a peripheral edge extending between the top and bottom faces and a drive hub receiving member accessible through the bottom face of the housing, the tape drive comprising: a drive housing; means to hold such a cartridge in an operating position in the drive housing; a drive hub arranged to engage the drive hub receiving member of such a cartridge in the operating position; an electric motor arranged to drive the hub; and means to retract the drive hub out of engagement with the hub receiving member to permit the cartridge to be withdrawn from the operating position substantially by sliding movement in an edgewise direction of the cartridge. In this tape drive, the drive hub has a pulley which is driven to rotate the reel, presumably by a rubber belt and a remote motor. The hub retracting mechanism has a substantial height, which is about nine times the thickness of the tape cartridge.

One aspect of the present invention is characterised in that the motor has a main body disposed in the drive housing directly beneath the cartridge when in the operating position; and the means for retracting the drive hub are such that the drive hub is retractable from a position projecting from the motor body into engagement with the hub receiving member of the cartridge to a position retracted into the motor body and clear of the cartridge.

In accordance with another aspect of the present invention, there is provided a drive mechanism for a tape drive machine, comprising a motor having a rotor, a tape reel drive hub for driving a tape reel arranged to be driven by the motor, means to cause the hub to move in opposite axial directions between a first axial position in which the hub is engaged with the tape reel and a second axial position in which the hub is disengaged from the tape reel, and means selectable to lock the hub in at least the first axial position, characterised in that the rotor is annular, the hub is mounted within the rotor, the movement causing means is operable to cause the movement in the opposite axial directions in response to relative rotation of the hub and rotor in first and second opposite directions, and the locking means is operable to permit rotary drive to be transferred from the rotor to the hub when the hub is in the first axial position.

Preferred features of the invention are set out in the subsidiary claims.

Specific embodiments of the invention will now be described by way of example with reference to the accompanying drawings, in which:
Figures 1A, 1B and 1C are plan, side and under plan views, respectively, of a 4˝x5˝x1˝ tape cartridge;
Figure 2 is a schematic side view of a known tape drive mechanism;
Figure 3 is a schematic side view of a tape drive machine in accordance with the invention, with a tape cartridge shown in the operative position;
Figure 4 is a view similar to Figure 3, but showing a tape cartridge partially withdrawn, using one system according to the invention;
Figure 5 is a view similar to Figure 3, but showing a tape cartridge partially withdrawn, using another system according to the invention;
Figure 6 is a partially cut-away perspective view, partly from below, of a drive hub retracting mechanism;
Figures 7A, 7B and 7C illustrate the operation of the drive hub mechanism; and
Figures 8A and 8B are side views illustrating the drive mechanism.

Referring to Figure 3, the enclosure of a tape drive machine according to the invention has a nominal height of 41mm. A low height motor 34 is mounted adjacent the floor of the housing 30, and a drive hub 36 projects upwardly from the motor 34 into engagement with the drive receiving member 22 of a standard cartridge disposed in an operating position, as shown in dashed lines in Figure 3, in the enclosure 30.

Referring to Figure 4, in accordance with one embodiment of the invention, the drive hub 36 can be retracted into the height of the motor 34, and thus the tape cartridge 10 can be withdrawn from the enclosure 30 solely by movement in the edgeways direction, as denoted by arrow 38, and a different cartridge can then be loaded into the enclosure 30, whereupon the drive hub 36 is raised into engagement with the replacement cartridge.

Referring to Figure 5, in an alternative embodiment, the hub 36 is not retractable, but instead the motor 34, together with the hub 36 is mounted for sliding movement in the edgewise direction of the cartridge 10, as denoted by the arrow 40, to a position in which all or nearly all of the cartridge is disposed outside of the enclosure 30, whereupon the cartridge 10 can be lifted clear of the drive hub 36 and completely removed from the drive machine. A replacement cartridge can then be dropped onto the drive hub, and the motor 34, drive hub 36 and replacement cartridge 10 can then be slid into the machine in the direction opposite to arrow 40 to the position as shown in Figure 3.

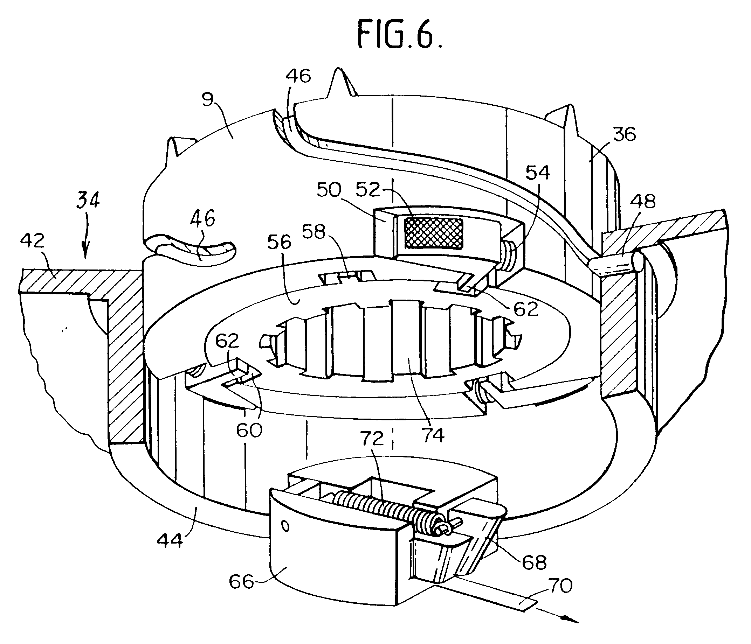

Referring to Figure 6, the retracting hub mechanism described with reference to Figures 3 and 4 is illustrated. The motor 34 has an annular rotor 42 with a cylindrical wall 44. The drive hub 36 is generally cylindrical and is fitted within the cylindrical wall 44 of the rotor. The outer cylindrical surface of the drive hub 36 is formed with three somewhat helical grooves 46, and corresponding pins 48 project from the inner cylindrical surface of the annular rotor 42 into engagement with the grooves 46 so that relative rotational movement between the drive hub 36 and rotor 42 produces axial movement of the hub relative to the rotor. If need be, a further set of pins may be provided at a different axial position to the pins 48 so that for one portion of the axial movement of the hub 36 the pins 48 engage the grooves 46 and so that for another portion of the movement of the hub the further pins engage the grooves, there being an overlap when both sets of pins engage the grooves. In one alternative arrangement, the pins may be provided on the hub 36, rather than on the wall 44, and the grooves may be provided in the wall 44, rather than in the hub 36. In another alternative arrangement, grooves may be formed in the hub 36 and the wall 44, and balls may be provided between the grooves so that the arrangement acts as a ball screw. Three wedge shaped recesses are formed around the outer surface of the drive hub 36, and each recess 50 is fitted with a wedge shaped brake element 52. The wedge shapes of the recess 50 and the brake element 52 are complementary and produce a jamming action between the brake element 52 and inner surface of the rotor wall 44, under assistance of a spring 54 when the rotor 42 is driven in one direction.

A tubular internally splined brake release member 56 is fitted inside the drive hub 36. The brake release member has a radial projection 58 engagable in a recess in the internal cylindrical wall of the drive hub 36 to limit relative movement of the brake release member relative to the drive hub. Furthermore, the brake release member has three radially outwardly facing recesses 60, into each of which an operating arm 62 projects from a respective one of the brake elements 52. A latching unit 66 is mounted relative to the stator of the motor within the splined interior of the brake release member 56 and has a latch element 68 which can be operated by a ligament 70 against the action of a return spring 72 to project into engagement with the splines 74 of the break release member 56.

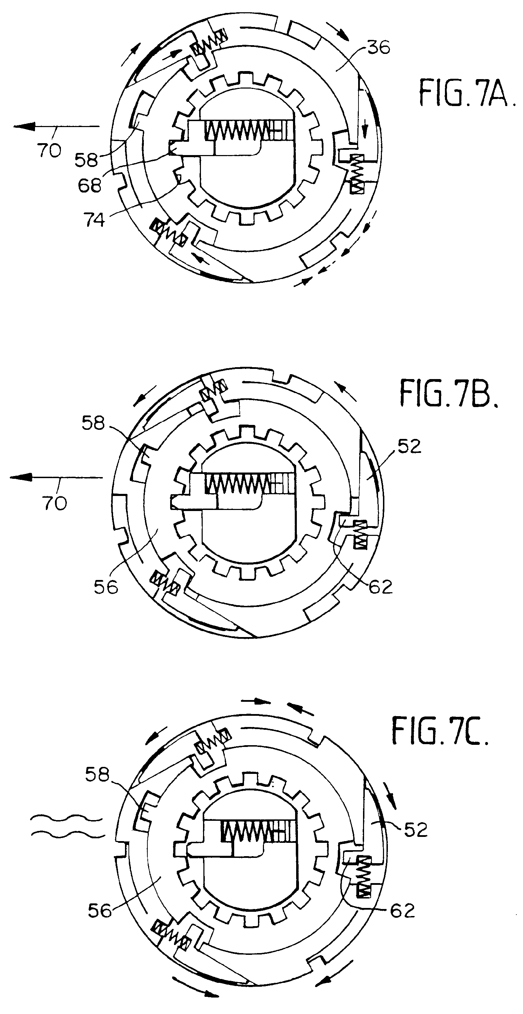

The operation of the drive hub arrangement of Figure 6 will now be described with reference to Figures 7A, 7B and 7C.

Referring to Figure 7A, and commencing with the arrangement in which the drive hub 36 is retracted into the rotor 42, in order to make the hub rise, the ligament 70 is tensioned and the rotor 42 is rotated clockwise when viewed from the underside of the drive. Tensioning the ligament 70 causes the latch element 68 to engage with the splines 74 of the brake release member 56 and thus prevents rotation of the brake release member 56. The projection 58 prevents the drive hub 36 from rotating. Relative rotation between the rotor 42 and the drive hub 36 is permitted by the brake elements 52, because the relative rotation is in a direction to tend to un-jam the brake elements. The relative rotation between the rotor 42 and the drive hub 36 causes the drive hub 36 to rise through the action between the pins 48 and the grooves 46 until the pins 48 reach the ends 74 of the grooves. The arrangement then jams until the latch element 68 is disengaged from the splines 74 by releasing the tension on the ligament 70. Referring to Figure 7C, upon such release, the drive hub 36 can be turned in either direction by the rotor 42. Relative rotation between the drive hub 36 and rotor 42 is prevented in one direction by engagement of the pins 48 with the ends 74 of the grooves 46, and is prevented in other direction by the jamming action of the brake elements 52 against the inner cylindrical wall of the rotor 42.

Referring to Figure 7B, in order to retract the hub 36 into the rotor 42, the rotor is driven in the anti-clockwise direction, when viewed from the underside of the drive, and the ligament 70 is tensioned. Upon tensioning of the ligament, the latch element 68 is re-engaged with the splines 74 in the brake release member 56. Thus, the brake release member 56 is stalled. The release arms 62 on the brake elements 52 are therefore engaged by the recesses in the brake release member 56 and cause the brake elements 52 to become un-jammed from the rotor 42. Also, the projection 58 on the brake release member 56 prevents the drive hub 36 from rotating, and therefore the relative rotation between the rotor 42 and the drive hub 36 causes the drive hub 36 to be retracted into the rotor 42 until an abutment shoulder inside the brake release member 56 engages the latch unit 66 to limit the descent of the drive hub 36 and brake release member 56. The motor is then stalled until the ligament 70 is released and thus the latch element 68 is disengaged from the splines 74.

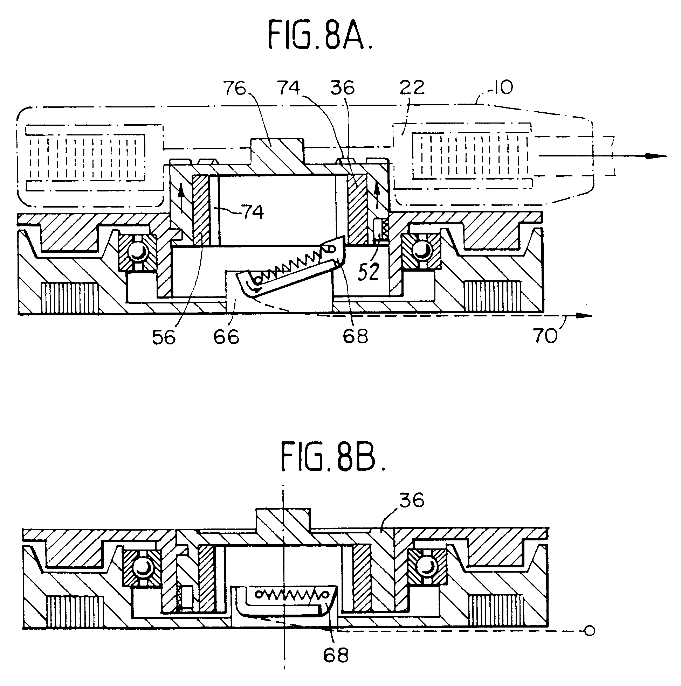

For further illustration, the operation of the drive hub mechanism is illustrated in Figures 8A and 8B. In the situation shown in Figure 8A, the hub 36 has been raised, but the latch element 68 has not yet been released. In Figure 8B, the hub 36 has been retracted, and the latch element 68 has been released. Referring to Figure 8A, it can be seen that, once the hub has been raised, drive dogs 74 are engagable with the drive teeth of the supply reel 22 in the cartridge housing 10, and a central projection 76 on the hub is engagable with the locking button (not shown) of the cartridge 10. As also shown in Figure 8A, the latching element 68 of the latch unit 66 may be arranged so that it is biased upwardly upon tensioning of the ligament 70 so that it can maintain engagement with the splines 74 of the brake release member 56 despite the upward movement of the drive hub 36 and the brake release member 56.

## Claims

1. A recording/reproducing apparatus using a tape cartridge (10) of the type having a generally flat cartridge housing with top and bottom faces (12, 14) and a peripheral edge (16) extending between the top and bottom faces and a drive hub receiving member (22) accessible through the bottom face of the cartridge housing, the apparatus including:
an housing (30) accomodating a tape drive comprising:
means to hold such a cartridge in an operating position in the drive housing;
a drive hub (36) arranged to engage the drive hub receiving member of such a cartridge in the operating position;
an electric motor (34) arranged to drive the hub; and
means (46, 48) to retract the drive hub out of engagement with the hub receiving member to permit the cartridge to be withdrawn from the operating position substantially by sliding movement in an edgewise direction of the cartridge;
characterised in that:
the motor has a main body (34) disposed in the drive housing directly beneath the cartridge when in the operating position; and
the means (46, 48) for retracting the drive hub (36) are such that the drive hub is retractable from a position (Figs. 3, 8A) projecting from the motor body into engagement with the hub receiving member of the cartridge to a position (Figs. 4, 8B) retracted into the motor body and clear of the cartridge.

2. An apparatus as claimed in claim 1, wherein the housing (30) is adapted to receive a cartridge having nominal dimensions of 127mm (5˝) long, 102mm (4˝) wide and 25mm (1˝) high.

3. An apparatus as claimed in claim 2, wherein the housing is adapted to receive a cartridge according to specification IBM GS 32-0048-0, ECMA 120, ANSI X3B5-87-037, or a substantially equivalent specification.

4. An apparatus as claimed in any preceding claim, wherein the drive has overall dimensions of substantially 83mm (3.25˝) high, 146mm (5.75˝) wide and not greater than 203mm (8˝) long.

5. A tape drive apparatus, having a drive mechanism comprising a motor (34) having a rotor (42), a tape reel drive hub (36) for driving a tape reel arranged to be driven by the motor, means (46, 48) to cause the hub to move in opposite axial directions between a first axial position (Fig. 8A) in which the hub is engaged with the tape reel and a second axial position (Fig. 8B) in which the hub is disengaged from the tape reel, and means (52) selectable to lock the hub in at least the first axial position, characterised in that the rotor is annular, the hub is mounted within the rotor, the movement causing means is operable to cause the movement in the opposite axial directions in response to relative rotation of the hub and rotor in first and second opposite directions, and the locking means is operable to permit rotary drive to be transferred from the rotor to the hub when the hub is in the first axial position.

6. An apparatus as claimed in claim 5, wherein the hub projects from the rotor in the first position (Fig. 8A) and is retracted into the rotor in the second position (Fig. 8B).

7. An apparatus as claimed in claim 5 or 6, wherein the means to cause the hub to move axially comprises a screw thread (46) or the like acting between the hub and the rotor.

8. An apparatus as claimed in claim 7, wherein the means for causing the hub to move axially comprises at least one projection (48) on one of the rotor and the hub engaging in a complementary groove (46) in the other of the rotor and the hub.

9. An apparatus as claimed in claim 7, wherein the means to cause the hub to move axially comprises at least one pair of grooves in the hub and rotor respectively, and a rolling transmission element engaging both grooves of the pair.

10. An apparatus as claimed in any of claims 5 to 9, wherein the hub is prevented from moving past the first axial position from the first axial position with respect to the rotor, and wherein the locking means comprises a brake (52) operable to prevent relative rotation between the hub and the rotor in the direction which would cause the hub to move from the first to the second axial position with respect to the rotor.

11. An apparatus as claimed in any of claims 1 to 4, wherein a drive mechanism is provided as claimed in any of claims 5 to 10.

## Patentansprüche

1. Bandkassette (10) von dem Typ, welcher ein im wesentlichen flaches bzw. ebenes Kassettengehäuse mit Ober- und Unterseiten (12, 14) und einen umlaufenden Rand (16) hat, der sich zwischen den oberen und unteren Seiten erstreckt, und ein Aufnahmeteil (22) für eine Antriebsnabe, welche durch die untere Seite bzw. Bodenseite des Kassettengehäuses zutritt hat, wobei die Vorrichtung aufweist:
ein Gehäuse (30), welches einen Bandantrieb aufnimmt, der aufweist:
eine Einrichtung zum Halten der Kassette in einer Betriebsposition in dem Antriebsgehäuse,
eine Antriebsnabe (36) die für den Eingriff in das Antriebsnabenaufnahmeteil einer solchen Kassette in der Betriebsposition ausgelegt ist,
einen elektrischen Motor (34), der für den Antrieb der Nabe ausgelegt ist, und
Einrichtungen (46, 48) für das Zurückziehen der Antriebsnabe außer Eingriff mit dem die Nabe aufnehmenden Teil, um zu ermöglichen, daß die Kassette aus der Betriebsposition im wesentlichen durch eine Gleitbewegung in Richtung eines Randes der Kassette weggenommen werden kann,
**dadurch gekennzeichnet, daß**
der Motor einen Hauptkorpus (34) hat, der in dem Antriebsgehäuse unmittelbar unterhalb der Kassette angeordnet ist, wenn diese sich in der Betriebsposition befindet, und
daß die Einrichtungen (46, 48) zum Zurückziehen der Antriebsnabe (36) derart ausgestaltet sind, daß die Antriebsnabe aus einer Position (siehe Figuren 3, 8A), in welcher sie von dem Motorkorpus in Eingriff mit dem Nabenaufnahmeteil der Kassette vorspringt, zu einer Position (siehe Figuren 4, 8B) zurückgezogen werden kann, in welcher sie in den Motorkorpus eingezogen ist und die Kassette freigibt.

2. Vorrichtung nach Anspruch 1, wobei das Gehäuse (30) dafür ausgelegt ist, eine Kassette mit nominellen Maßen von 127 mm (5 Zoll) Länge 102 mm (4 Zoll) Breite und 25 mm (1 Zoll) Höhe aufzunehmen.

3. Vorrichtung nach Anspruch 2, wobei das Gehäuse dafür ausgelegt ist, eine Kassette gemäß einer Spezifikation IBM GS 32-0048-0, ECMA 120, ANSI X3B5-87-037 oder gemäß einer im wesentlichen äquivalenten Spezifikation aufzunehmen.

4. Vorrichtung nach einem der vorstehenden Ansprüche, wobei der Antrieb Gesamtabmessungen von im wesentlichen 83 mm (3,4 Zoll) Höhe, 146 mm (5,75 Zoll) Breite und nicht mehr als 203 mm (8 Zoll) Länge hat.

5. Bandantriebsvorrichtung mit einem Antriebsmechanismus, welcher einen Motor (34), mit einem Rotor (42), eine Bandspulenantriebsnabe (36) für den Antrieb einer Bandspule, welches für den Antrieb durch den Motor ausgelegt ist, Einrichtungen (46, 48) um zu bewirken, daß sich die Nabe in entgegengesetzten axialen Richtungen zwischen einer ersten axialen Position (Figur 8A) in welcher die Nabe mit der Bandspule in Eingriff steht, und einer zweiten axialen Position (Figur 8B) bewegt, in welcher die Nabe mit der Bandspule außer Eingriff ist, und Einrichtungen (52) aufweist, die Wahlweise die Nabe in zumindest der ersten Axialposition verriegeln, **dadurch gekennzeichnet, daß** der Rotor ringförmig ist, die Nabe innerhalb des Rotors montiert ist, die die Bewegung bewirkende Einrichtung so betreibbar ist, daß sie die Bewegung in entgegengesetzten Axialrichtungen unter Ansprechen auf eine Relativdrehung der Nabe und des Rotors in einer ersten und zweiten Richtung bewirkt, die einander entgegengesetzt sind, und daß die Verriegelungseinrichtung so betreibbar ist, daß sie ermöglicht, daß ein Drehantrieb von dem Rotor auf die Nabe übertragen wird, wenn sich die Nabe in der ersten axialen Position befindet.

6. Vorrichtung nach Anspruch 5, wobei die Nabe in der ersten Position (8A) von dem Rotor hervorsteht und in der zweiten Position (8B) in den Rotor zurückgezogen ist.

7. Vorrichtung nach Anspruch 5 oder 6, wobei die Einrichtungen, die bewirken, daß sich die Nabe axial bewegt, ein Schraubgewinde (46) oder dergleichen aufweisen, welches zwischen der Nabe und dem Rotor wirkt.

8. Vorrichtung nach Anspruch 7, wobei die Einrichtung, welche bewirkt, daß sich die Nabe axial bewegt, zumindest einen Vorsprung (48) entweder auf dem Rotor oder auf der Nabe aufweist, der in eine komplementäre Nut (46) in dem anderen der Teile Rotor und Nabe eingreift.

9. Vorrichtung nach Anspruch 7, wobei die Einrichtung, welche bewirkt, daß die Nabe sich in axialer Richtung bewegt, zumindest ein Paar von Nuten in der Nabe bzw. dem Rotor, sowie ein abrollendes Übertragungselement aufweisen, welches in die beiden Nuten dieses Paares eingreifen.

10. Vorrichtung nach einem der Ansprüche 5 bis 9, wobei verhindert wird, daß sich die Nabe aus der ersten axialen Position bezüglich des Rotors über die erste axiale Position hinausbewegt, und wobei die Verriegelungseinrichtung eine Bremse (52) aufweist, die so betreibbar ist, daß sie eine Relativdrehung zwischen der Nabe und dem Rotor in der Richtung verhindert, in welcher bewirkt würde, daß sich die Nabe bezüglich des Rotors aus der ersten in die zweite axiale Position bewegt.

11. Vorrichtung nach einem der Ansprüche 1 bis 4, wobei ein Antriebsmechanismus vorgesehen ist, wie er in einem der Ansprüche 5 bis 10 beansprucht ist.

## Revendications

1. Appareil d'enregistrement et/ou de reproduction utilisant une cartouche de bande (10) du type comportant un boîtier de cartouche globalement plat avec des faces supérieure et inférieure (12, 14) et un bord périphérique (16) s'étendant entre les faces supérieure et inférieure et un élément de réception de moyeu d'entraînement (22) accessible à travers la face inférieure du boîtier de cartouche, l'appareil comprenant :
un boîtier (30) logeant un entraînement de bande comprenant :
des moyens pour maintenir une telle cartouche dans une position de mise en oeuvre dans le boîtier d'entraînement ;
un moyeu d'entraînement (36) disposé pour s'engager dans l'élément de réception de moyeu d'entraînement d'une telle cartouche, dans la position de mise en oeuvre ;
un moteur électrique (34) disposé pour entraîner le moyeu ; et
des moyens (46, 48) pour rétracter le moyeu d'entraînement hors de prise avec l'élément de réception de moyeu pour permettre que la cartouche soit extraite de la position de mise en oeuvre par un déplacement sensiblement coulissant dans une direction sur chant de la cartouche ;
caractérisé en ce que :
le moteur comporte un corps principal (34) disposé dans le boîtier d'entraînement, directement sous la cartouche lorsqu'elle est dans la position de mise en oeuvre ;
et en ce que les moyens (46, 48) pour rétracter le moyeu d'entraînement sont tels que le moyeu d'entraînement (36) est rétractable depuis une position (figures 3, 8A) en saillie par rapport au corps de moteur, en prise avec l'élément de réception de moyeu de la cartouche, jusqu'à une position (figures 4, 8B) rétractée dans le corps de moteur et dégagée de la cartouche.

2. Appareil selon la revendication 1, dans lequel le boîtier (30) est conçu pour recevoir une cartouche ayant des dimensions nominales de 127 mm (5˝) de longueur, 102 mm (4˝) de largeur et 25 mm (1˝) de hauteur.

3. Appareil selon la revendication 2, dans lequel le boîtier est conçu pour recevoir une cartouche selon la spécification IBM GS 32-0048-0, ECMA 120, ANSI X3B5-87-037, ou une spécification sensiblement équivalente.

4. Appareil selon l'une quelconque des revendications précédentes, dans lequel l'entraînement a des dimensions globales sensiblement de 83 mm (3,25˝) de hauteur, 146 mm (5,75˝) de largeur et pas plus de 203 mm (8˝) de longueur.

5. Dérouleur de bande comportant un mécanisme d'entraînement comprenant : un moteur (34) ayant un rotor (42) ; un moyeu d'entraînement de bobine débitrice (36) pour entraîner une bobine débitrice agencée pour être entraînée par le moteur ; des moyens (46, 48) pour provoquer le déplacement du moyeu dans des directions axiales opposées, entre une première position axiale (figure 8A) dans laquelle le moyeu est en prise avec la bobine de bande et une seconde position axiale (figure 8B) dans laquelle le moyeu est dégagé de la bobine de bande ; et des moyens de verrouillage (52) pouvant être sélectionnés pour verrouiller le moyeu dans au moins la première position axiale, caractérisé en ce que le rotor est annulaire, en ce que le moyeu est monté à l'intérieur du rotor, en ce que les moyens provoquant le déplacement sont manoeuvrables pour provoquer le déplacement dans les directions axiales opposées en réponse à la rotation relative du moyeu et du rotor dans des premier et second sens opposés, et en ce que les moyens de verrouillage sont manoeuvrables pour permettre à l'entraînement en rotation d'être transféré du rotor au moyeu lorsque le moyeu est dans la première position axiale.

6. Dérouleur selon la revendication 5, dans lequel le moyeu dépasse du rotor dans la première position (figure 8A) et est rétracté dans le rotor dans la seconde position (figure 8B).

7. Dérouleur selon la revendication 5 ou 6, dans lequel le moyen pour provoquer le déplacement axial du moyeu comprend un filet de vis (46) ou analogue, agissant entre le moyeu et le rotor.

8. Dérouleur selon la revendication 7, dans lequel le moyen pour provoquer le déplacement axial du moyeu comprend au moins une saillie (48) sur l'un du rotor et du moyeu s'engageant dans une rainure complémentaire (46) dans l'autre du rotor et du moyeu.

9. Dérouleur selon la revendication 7, dans lequel le moyen pour provoquer le déplacement axial du moyeu comprend au moins une paire de rainures dans, respectivement, le moyeu et le rotor, et un élément de transmission roulant s'engageant dans les deux rainures de la paire.

10. Dérouleur selon l'une quelconque des revendications 5 à 9, dans lequel le moyeu est empêché de se déplacer, par rapport au rotor, au-delà de la première position axiale à partir de la première position axiale, et dans lequel le moyen de verrouillage comprend un frein (52) manoeuvrable pour empêcher la rotation relative entre le moyeu et le rotor dans la direction qui amènerait le moyeu à se déplacer, par rapport au rotor, de la première vers la seconde position axiale.

11. Appareil selon l'une quelconque des revendications 1 à 4, dans lequel est disposé un mécanisme d'entraînement selon l'une quelconque des revendications 5 à 10.
